# EUROPEAN PATENT APPLICATION

(11) **EP 3 301 268 A1**
(43) Date of publication of application: **04.04.2018**
(21) Application number: 16191522.8
(22) Date of filing: 29.09.2016
(51) Int. Cl.: F01K 13/02, F01K 23/10, F02C 9/26, F02C 9/42

(54) **POWER PLANT CONTROL IN COORDINATION WITH FURTHER ENERGY SOURCES, LIKE RENEWABLE ENERGY**

(71) Applicant: Siemens Aktiengesellschaft, 80333 München (DE)
(72) Inventor: Lundgren, Sten-Inge, 61291 Finspong (SE); Jaerling, Patrik, 58943 Linköping (SE); Strömberg, Lena, 61283 Finspång (SE)

(57) **Abstract**

The invention is directed to a method for controlling a power plant (1), the power plant (1) at least comprising a gas turbine engine (5) and a generator (3). The generator (3) is initially driven by the gas turbine engine (5) in a generator mode and the generator (3) is connectable to a power grid (2) for feeding power to the power grid (2).

The method comprises the steps of reducing or switching off main fuel while supplying pilot fuel to a combustor (7) of the gas turbine engine (5), consecutive to operation in the generator mode, and maintaining the generator (3) synchronised to the power grid (2), such that the generator (3) is driven as a motor from power provided from the power grid (2).

Furthermore the invention is directed to a gas turbine power plant and a combined cycle power plant to perform such a method.

## Description

### FIELD OF THE INVENTION

The invention relates to a method for controlling a power plant, particularly a gas turbine power plant or a combined cycle power plant, to be operated when sufficient power is provided from alternative power or energy sources, particularly from renewable energy. The invention relates further to such power plants operated under such a control system.

### BACKGROUND OF THE INVENTION

The efficiency of a simple cycle gas turbine power plant is relatively low and the temperature of the exhausted gas is high (e.g. 400-600°C). Thus a significant portion of the fuel energy is dumped and not converted to the desired form of electrical energy. But the high temperature of the exhausted gas allows the usage of heat recovery techniques in order to improve the overall plant efficiency. The recovered heat could be used to heat steam within a second cycle to drive a steam turbine engine. A combination of a gas turbine and steam turbine engine by transforming waste heat from the gas turbine engine into steam for the steam turbine engine results in a so called combined cycle power plant.

The steam turbine can be operated in a so called Rankine cycle for recovering energy from the exhausted gas. Such a Rankine cycle typically is based on a water-steam fluid in which water is evaporated into steam as a medium to drive the steam turbine engine.

Gas turbines and steam turbines can be used to drive generators to produce power locally to operate further electrical equipment or to provide power to a power grid, also called an electrical grid. An electrical grid is an interconnected network for delivering electricity from suppliers - power plants - to consumers.

Typically more than one power plant is connected to a power grid for supply of power. Lately, gas turbine power plants (also called simple cycle power plants) or combined cycle power plants (comprising gas and steam turbine engines) may only be used, if power from renewable energy sources cannot provide the base load. Furthermore, gas turbine power plants or combined cycle power plants may be used for supply of power for peak hours. Additionally these power plants may be used for emergency situations.

Some renewable energy sources like wind power plants or solar power plants are highly dependent on natural conditions and may generate too little or even too much power compared to the needs at a given time. In case of too little power generation from renewable energy sources, gas turbines or combined cycle power plants may be started or ramped up to provide the needed delta power. In other situations gas turbines or combined cycle power plants may be switched off again and disconnected from the power grid as no additional power is needed, and due to environmental aspects typically generation of power via renewable energy sources may be preferred compared to generation of power via fossil fuels.

Thus a quick start-up and ramp-up or alternatively ramp-down and shutdown is wanted for a gas turbine engine or a combined cycle power plant to quickly react on the different power demands.

Gas turbines may experience low-cycle fatigue (LCF) wear, wherein low-cycle fatigue defines a number of cycles until (calculated or estimated) failure. LCF is a mode of material degradation. For gas turbine engine components, an LCF cycle may represent major loading cycles such as engine start-up or shutdown. LCF wear may increase due to temperature fluctuations in the engine.

In consequence, after a given number of start-up and shutdown cycles, the turbine engine should be inspected and parts may be replaced.

Another problem in shutdown and start-up operation of a gas turbine engine is that gas turbine emissions in form of exhaust gases are typically higher in these transient modes compared to a full load operation, in which emissions are expected to be low.

### SUMMARY OF THE INVENTION

The present invention seeks to mitigate these drawbacks.

This objective is achieved by the independent claims. The dependent claims describe advantageous developments and modifications of the invention.

In accordance with the invention there is provided a method for controlling a power plant, the power plant at least comprising a gas turbine engine and a generator, wherein the generator is initially driven by the gas turbine engine in a generator mode and the generator is connectable to a power grid for feeding power to the power grid. The method comprises the steps of reducing or switching off main fuel while supplying pilot fuel to a combustor of the gas turbine engine, consecutive to operation in the generator mode, and maintaining the generator synchronised to the power grid, such that the generator is driven as a motor from power provided from the power grid.

In other words, in first mode of operation, main fuel is provided to the gas turbine engine, the generator is connected to the power grid, such that power is fed from the generator to the power grid. This is the regular generator mode of the gas turbine engine and the generator. In a second mode of operation consecutive to the first mode of operation, the main fuel is reduced or switched off while supplying pilot fuel to the gas turbine engine. The generator is maintained synchronised to the power grid, such that the generator is driven as a motor from power provided from the power grid.

The generator mode is defined as a mode of operation in which the gas turbine engine drives the generator such that power is fed from the generator to the power grid. This defines the "normal" mode of operation for such a power plant.

By using this method a simple cycle or a combined cycle power plant is operated with no active power production for transient and short term grid stability with emission compliancy to national or international standards. This applies to situations in which a power grid is subjected to high penetration of wind and solar power where active power of the production simple cycle or a combined cycle power plant is not required or would even cause additional problems due to excessive power.

Emission levels may be defined by the European Union, national organisations, or other institutes. For example the European Union has defined emission levels for combustion plants.

By keeping the generator synchronised - i.e. connected - to the power grid with low provision of fuel to the gas turbine engine, the power grid can be stabilized. All inertia from the generator - and possibly also its connected gas turbine engine - is synchronised to the power grid, thus damping a Rate of Change of Frequency (RoCoF).

This method is particularly advantageous during times when active power production is not required from the generator.

It is also an advantage to brake the power grid at overproduction of power. Positive frequency derivative by means of power absorption from the power grid is achieved by running the generator as synchronous motor with the compression work from a compressor of the gas turbine engine, magnitude controlled by dedicated control algorithm controlling the minimum fuel injection level for sustaining of gas turbine combustion.

Furthermore the power grid is stabilised with the reactive capability from the generator running at zero power factor (PF).

Reducing or switching off main fuel and supply of pilot fuel is set up to provide fuel at a minimum level. As "main fuel" that part of the supplied fuel is specified that is injected at positions and with an amount of fuel designed for full load operation. "Main fuel" typically is provided for lean combustion producing a low exhaust emission, particularly of NOx and/or CO. It is a goal to mix main fuel as perfectly as possible with air to generate a lean flame. "Pilot fuel" may be added to stabilize the flame.

As "pilot fuel" that part of the supplied fuel is specified that is injected during start-up, shutdown, and/or transient modes of operation typically at different injection locations within the burner of the gas turbine engine. The same fuel type as main fuel may be supplied or even a different type of fuel. Pilot fuel is supplied with sufficient amount to stabilize the flame and to avoid combustion dynamics. As a downside typically the emission will increase if pilot fuel is injected as the fuel is not combusted perfectly.

According to the invention the main fuel is reduced or switched off to stop power generation. In that mode it may be that the pilot fuel can also be reduced, can be maintained at a same level, or even be increased, depending upon the flame stability. The overall fuel supply should be reduced, though, so that gas turbine combustion is reduced to a minimum level and therefore less rotational power (or force) or torque is produced by the gas turbine engine via its shaft, with the consequence that less rotational power is applied to the generator connected to that shaft.

By reducing the fuel supply, the generator may become idle and with continued reduction of fuel supply the generator will leave the generator mode (i.e. the "normal" mode of operation for a generator) and will be driven from the power grid, so acting as a motor.

Depending on the shaft connection between the gas turbine engine and the generator, the generator operated as a synchronous motor will then also apply rotational force to the gas turbine engine via the shaft, so the generator and the gas turbine engine will be driven - i.e. operated or propelled - by the power grid.

By this, there is no active production of power by the gas turbine power plant which comprises the gas turbines engine and the generator. As an additional benefit this power plant can "brake" the power grid due to its inertia. The inertia is caused by is mass and by the torque/power absorbed by the gas turbine compressor.

The term "power grid" or "electrical grid" - or just "grid" - is used for a power network operating with alternating current (AC) frequencies. In a synchronous grid all generators run at the same frequency but also at the same phase. In such a power grid, generation and consumption of power must be balanced across the entire grid.

In an embodiment the step of reducing or switching off main fuel may be triggered in response to a signal indicating an excessive supply - an over supply - of power to the power grid from further power plants - particularly power plants with higher priority in respect of a priority for feeding power into the grid -, particularly renewable energy power plants, like wind power generators or solar power plants. These renewable energy power plants can experience excess capacity or over capacity which may be stored in energy storages. Contrary, in some situations renewable energy power plants may cause under-supply of power - e.g. when no wind or no sun is present - so that immediate power supply is needed from further sources, like the previously explained simple cycle or combined cycle power plants. The invention allows a quick switch over without negative impact to emissions and lifetime of the turbine.

In a further embodiment the method may further comprise the steps of monitoring a flame stability in a combustor of the gas turbine engine, and increasing the pilot fuel supply in response to detecting insufficient flame stability, while the generator is maintained to be operated as a motor. Thus, this allows increasing the fuel supply again mildly if the reduction of fuel is too radical.

Besides, the method may further comprise the steps of monitoring an operating parameter indicative to rotational power generated by the gas turbine engine at its shaft that connects to the generator, and throttling the pilot fuel supply in response to detecting the operational parameter to exceed a given threshold, such that the generator is maintained to be operated as a motor. The operating parameter may be the torque generated by the gas turbine engine or also an indirect parameter like the combustion temperature or the exhaust temperature.

In consequence, the last options allow operating the power plant in a given operating window in which the generator is maintained to be operated as a motor.

In a further embodiment, particularly when power should be supplied again from the power plant to the power grid, the following steps may be advantageous: in response to a trigger signal - possibly provided from data network related to the power grid or possibly initiated from a central control station of the power grid -, re-activating and ramping up fuel supply of the main fuel to the burner of the gas turbine engine to increase rotational power or torque of the gas turbine engine, such that the generator is operated in the generator mode again.

A quick switchover is possible as the gas turbine engine has not been completely switched off and all components were kept sufficiently hot.

The invention can also be applied to a combined cycle power plant, which comprises of a gas turbine engine, a steam turbine, and two connected generators. For such a combined cycle configuration, the power plant comprises the previously mentioned gas turbine engine and the previously introduced generator. Additionally it comprises an additional steam turbine and a further generator driven by the steam turbine and connectable to the power grid for feeding power to the power grid, the steam turbine being supplied with steam heated by an exhaust gas heat exchanger connected to an exhaust of the gas turbine engine. The method may further comprise the steps of maintaining the further generator synchronised to the power grid, and operating the step of reducing or switching off the main fuel for the gas turbine engine in such a way that in consequence to the reducing or switching off the main fuel an amount and/or pressure and/or energy of the steam provided to the steam turbine is reduced so that the further generator operates with a power to the power grid limited by a minimum steam flow limit of the steam turbine. That means, the further generator operates preferably at its minimum steam flow limit, for example 20% of the steam flow compared to the nominal steam flow, possibly even 10% steam flow compared to the nominal steam flow, resulting in a low generated power to the power grid, e.g. 20%. Depending on the used components, the steam flow limit of the steam turbine may be set to any value between the 10% and 20% steam flow compared to the nominal steam flow.

The minimum steam flow limit pre-defined for a specific steam turbine installation or may be determined from sensors and/or operating conditions during operation.

Differently to the further generator driven by the steam turbine, in this mode of operation, the generator driven by the gas turbine engine will be operated as motor.

The exhaust gas heat exchanger transforms exhaust heat from the gas turbine engine - heat of the fluid at the exhaust of the gas turbine engine - in heat of steam which then is supplied to the steam turbine. Particularly the steam is present in a closed loop of air and/or steam.

The produced amount of steam is preferably kept at the minimum steam flow level to keep the steam turbine in operation and therefore running. The steam turbine can be kept warm enough enabling fastest possible steam turbine ramping up of active power when direct regulation of gas turbine occurs.

In this configuration the power system may be stabilized with the reactive capability from gas turbine generator(s) running at zero power factor and from the steam turbine generator running at minimum steam flow limit, for example at 0.25 power factor.

With all turbine generators synchronized it is possible, with immediate gas turbine response, to produce full active gas turbine power and consecutive steam turbine power.

Due to running the further generator of the steam turbine as a generator with a low - for example a 0.25 - power factor, the inertia to be revolved - i.e. the gas turbine generator and the gas turbine engine - is kept high.

As said before, some or all generators connected to gas turbine engines in the power plant may be operated as motors driven by the power grid. Alternatively only one or a subset of available generators may be operated as a motor. The other generator may be maintained in generator-mode - possibly at a low level of fed power into the power grid - or substantially in idle operation. "Idle" in this respect means that the generator is operated in a transition region between generator-mode and motor-mode.

The invention is also directed to a method to control a power plant or to a power plant itself - simple cycle or combined cycle -, which comprises a control unit or control arrangement to operate the explained method.

Coming back to the previously introduced pre-defined minimum steam flow limit of the steam turbine, this limit may be defined based on the steam flow rate or mass flow rate, which in turn is defined as weight per time frame (e.g. kg/h). This minimum limit can also be derived from a minimum inlet steam pressure and/or on a minimum inlet steam temperature defined for the steam turbine. Besides, the minimum limit can also be defined based on a pre-defined critical minimum pressure of a steam generator within the steam cycle.

Minimum limits may be engine specific, depending on the turbine design and operating conditions. Because of the high pressures used in steam turbines, the casings are usually quite thick, and consequently steam turbines exhibit large thermal inertia. Thus, steam turbines must be warmed up and cooled down slowly to minimize the differential expansion between the rotating blades and the stationary parts. For example large steam turbines can take over ten hours to warm up. This behaviour is considered by the present invention such that the steam turbine is not deactivated but continuously operated, but only with low power generation.

The minimum limit for operating the steam turbine may be defined that the steam turbine will be operated above a state given by the steam temperature and the steam pressure at which the first liquid droplets would appear in the steam. So this is the state of first condensation. This would otherwise lead to unwanted erosion.

It has to be noted that embodiments of the invention have been described with reference to different subject matters. In particular, some embodiments have been described with reference to system type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment.

### BRIEF DESCRIPTION OF THE DRAWINGS

Embodiments of the invention will now be described, by way of example only, with reference to the accompanying drawings, of which:
- FIG. 1:: shows schematically a combined cycle power plant;
- FIG. 2:: illustrates the control method via a block diagram;
- FIG. 3:: shows a flow chart to illustrate the method of operation.

The illustration in the drawing is schematic. It is noted that for similar or identical elements in different figures, the same reference signs will be used.

Some of the features and especially the advantages will be explained for a combined cycle power plant, but obviously the features can be applied also to the single components like the gas turbine or a generator. The advantages may only be present during operation. But when explained by means of a power plant during operation none of the details should be limited to a power plant while in operation.

### DETAILED DESCRIPTION OF THE INVENTION

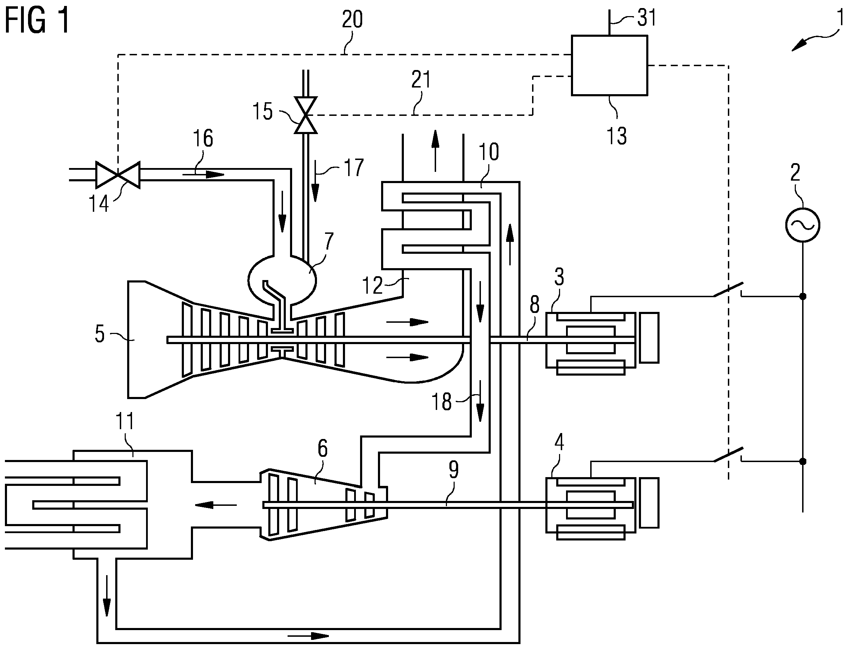

Referring to FIG. 1 a power plant 1 as a combined cycle power plant is shown in a block diagram. The power plant 1 comprises a gas turbine engine 5, a steam turbine 6, a gas turbine generator 3 connected to the gas turbine engine 5, and a steam turbine generator 4 as a further generator connected to the steam turbine 6. Additionally and abstractly a power grid 2 is shown to which the gas turbine generator 3 and the steam turbine generator 4 can be connected to. A control unit 13 is present to control whether the gas turbine generator 3 or the steam turbine generator 4 will be connected to the power grid 2. The control unit 13 may also have further tasks, like control and monitoring of the gas turbine engine 5 and the steam turbine 6.

The gas turbine engine 5 in configured that main fuel 16 and pilot fuel 17 - pilot fuel to stabilize the flame, particularly during start-up and transient operation - are provided to a combustor 7. These two types of fuels will be combusted with air to drive a turbine section of the gas turbine engine 5. Later on, the combusted fuel will be exhausted via the exhaust 12 - and still of elevated temperature - of the gas turbine engine 5. The exhaust 12 is equipped with the heat recovery steam generator 10 as an exhaust gas heat exchanger to provide a temperature conversion or transition from the combusted fluid with elevated temperature to a steam in a second cycle, so that the temperature of the steam is increased. The second cycle is a closed loop provided to the steam turbine 6 and is also called a Rankine cycle. Thus the heat recovery steam generator 10 increases the temperature of the steam 18 which is then provided to the steam turbine 6 to drive the steam turbine 6. Past the steam turbine 6, the cooled down and expanded fluid is then provided to a condenser 11. Past the condenser 11 the fluid is then returned back to the heat recovery steam generator 10 so that the steam can be heated again.

The gas turbine engine 5 is connected via a gas turbine shaft 8 to the gas turbine generator 3. Besides, the steam turbine 6 is connected to the steam turbine generator 4 via a steam turbine shaft 9. Gear boxes (not shown) may be present in between the components.

This combined cycle power plant 1 is particularly controlled by changing the setting of a main fuel valve 14 and a pilot fuel valve 15. These two fuel valves 14, 15 allow controlling the gas turbine engine 5 during different modes of operation. For example for a starting procedure the pilot fuel valve 15 may be widely opened and during the process of the starting procedure the main fuel valve 14 will continuously be opened while the pilot fuel valve 15 may be throttled in parallel. During starting procedure typically the gas turbine engine 5 increases its rotational speed until the revolving speed of the gas turbine generator 3 (and typically also the speed of the gas turbine shaft 8) is identical to the frequency or a factor of the frequency of the power grid 2. Once the gas turbine shaft 8 and the gas turbine generator 3 rotate at the target speed the also revolving gas turbine generator 3 will be connected to the power grid 2.

Besides, a similar procedure is performed for the steam turbine 6 with its steam turbine shaft 9 and the connected steam turbine generator 4. Eventually both generators 3, 4 will be connected to the power grid 2 to generate power and to supply this power to the power grid 2. This is called a generator mode in which the generator is synchronized to the power grid 2.

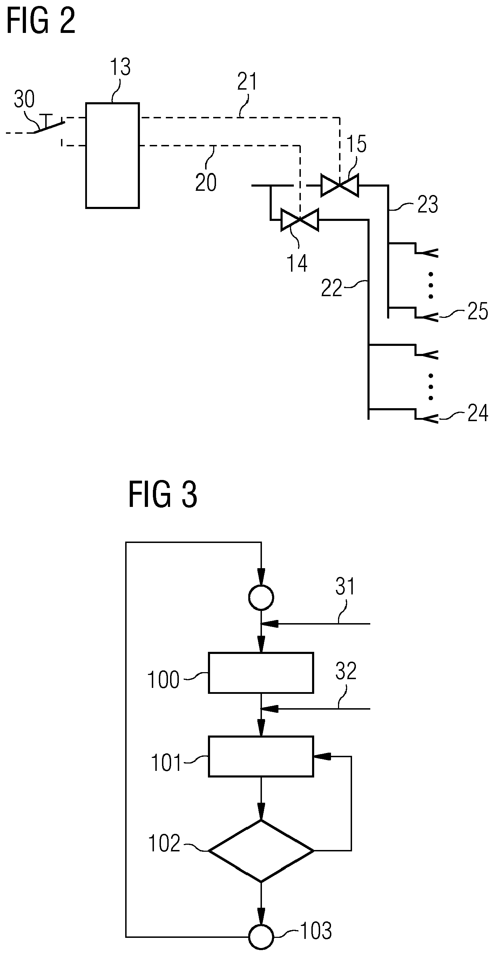

So far the normal operation of the combined cycle power system 1 was shown and explained, particularly for a start-up phase and a consecutive full load operation. In the following the inventive procedure is explained in more detail in relation to FIG. 1 in conjunction with FIG. 2. Assuming that the power grid 2 is also supplied from renewable energy sources by sufficient or even excessive power, the shown power plant 1 can be changed in operation so that no further power or reduced power is provided from this power plant 1 to the power grid 2. A trigger signal 31 provided to the control unit 13 - possibly from a central control station of the power grid 2 - may start this inventive procedure. The control unit 13 may also determine such a situation by monitoring electrical parameters of the power grid 2.

In such a mode of operation the control unit 13 will reduce the main fuel valve 14 or even switch off the main fuel via the main fuel valve 14 as triggered by a main fuel control 20. Furthermore, the pilot fuel valve 15 will be re-opened (if it was closed before), further opened (if it was partly opened) or simply will remain open based on a pilot fuel control 21 which is also controlled by the control unit 13. Due to the throttling of the main fuel 16 the torque or the revolving power of the gas turbine 5 will be reduced. The provision of pilot fuel 17 in turn guaranties a stable combustion in the combustor 7. By this, the power or the torque driving the gas turbine shaft 8 is reduced such that the driven gas turbine generator 3 will eventually not be driven anymore by the gas turbine engine 5 but from the - still synchronised - power grid 2 and is therefore operating as a motor and not any more in a generator mode.

Explaining briefly one more time main and pilot fuel: Main and pilot fuel typically are provided from a common source of fuel, but in alternative embodiments also different types of fuels with different chemical composition could be used. Main fuel is provided to specific main fuel injectors, typically located in positions that enable good mixing with air. Pilot fuel maybe provided via different fuel injectors, i.e. pilot fuel injectors. Pilot fuel may be injected at locations which will not mix that thoroughly with air. There may be an excess of pilot fuel at a local region within the combustor. In consequence are more stable flame can be realised, but resulting in a concentration of chemical components in the exhaust that are considered pollutants or emissions. Therefore, to meet low emission levels, it may be a general goal to keep pilot fuel at a low level, as low as possible but by keeping a stable combustion without combustion dynamics or flame out.

According to the present invention, main and pilot fuel supply is controlled slightly differently compared to previously known control procedures.

Coming back to the scenario of reducing or stopping main fuel but keeping with gas turbine generator 3 connected to the power grid 2, the combustor 7 generates less heat and/or reduced mass flow, so the fluidic power of the combusted fluid driving the turbine section of the gas turbine engine 5 is reduced. Less torque is created. In consequence also the exhausted fluid at the exhaust 12 has a reduced temperature. In further consequence the heat recovery steam generator 10 can increase the level of temperature of the steam 18 for the steam turbine 6 only in a reduced way. Therefore also the steam turbine 6 generates a reduced torque or rotational power via its steam turbine shaft 9. Therefore the steam generator 4 also is driven with reduced power from the steam turbine 6 but as it remains connected to the power grid 2 the steam generator 4 may therefore operate with reduced power dictated by the minimum steam flow limiter.

It needs to be appreciated that, at very low loads, reduced steam production and pressures below the minimum steam flow limit could otherwise lead to unstable configurations.

The minimum steam flow limiter may define a pre-defined limit for the steam flow which should not fall below this limit.

To reduce power to a minimum is understood as that a minimum amount of steam is provided to the steam turbine 6 so that also the steam turbine 6 operates at a minimum and the power factor is preferably 0.25. "Minimum" means for example 10% of full/nominal steam flow to the steam turbine engine 6.

In the explained procedure the shown combined cycle power plant 1 is running with no or very reduced active production of power. Particularly the gas turbine generator 3 may be operated as a motor. This can be used for transient and short term grid stability with emission compliance to national or international standards. The gas turbine engine 5 and the steam turbine engine 6 both remain active and operating and all components are kept warm without major temperature changes during this transition period. The power system is stabilized with all inertia from the turbine generators 3, 4 synchronized to the power system, i.e. the power grid 2. This mode of operation is particularly advantageous where active power production is not required, for example if high penetration of wind and solar power is available.

According to this method a synchronised operation with up to 100 % turndown of gas turbine is provided with simultaneous possibility to keep the steam turbine synchronised. Furthermore it is achieved to break the power grid 2 in overproduction. Damping of positive frequency derivative is achieved transiently by means of the synchronised inertia of the synchronised generators and power absorption from the grid by running the gas turbine generator as synchronous motor with the compression work from the gas turbine compressor.

If the power demand changes and the power plant 1 is supposed to generate power again to feed the power into the power grid 2, this mode of operation allows a quick ramp up of power because the gas turbine 5 can immediately be provided with sufficient fuel - main fuel - again to have a quick change to produce full active gas turbine power and consequently full steam turbine power again. A further advantage is that the steam turbine 6 is kept warm enough to enable as fast as possible steam turbine ramping up of active power in direct regulation of the gas turbine.

FIG. 2 illustrates this control method via an abstract block diagram, which should be reviewed together with the other figures. The control unit 13 has, as an input parameter, a turndown selector 30 to select between a normal turndown or a high (quick) turndown of the gas turbine engine 5. The control unit 13 comprises particularly a sequence governor and a protection unit. Via the pilot gas control 21 a pilot fuel valve 15 is controlled. The control unit 13 furthermore controls the main fuel valve 14 via the main fuel control 20. The main fuel will then be provided via a main fuel manifold 22 to a specific number of main burners 21. A pilot fuel will furthermore be provided via a pilot fuel manifold 23 to specific pilot burners 25.

In one mode of operation in normal turndown of the gas turbine engine is to be achieved. In this normal turndown mode of operation the pilot gas valve 15 will be opened. Furthermore also the main fuel valve 14 will be opened so that both types of fuels (14, 15) will be provided to the burners (24, 25) for a stable combustion for a normal turndown operation.

In a high turndown operation in which the gas turbine generator(s) 3 are supposed to be switched to a motor mode, the main fuel valve 14 will be switched off so that no main fuel will be provided to the main burners 24. The pilot fuel will be continued to be provided to the pilot burners 25. Therefore the pilot fuel valve 15 will remain open or throttled but with an amount of pilot fuel - i.e. greater than zero - provided to the pilot burners 25. Not shown in this FIG. 2 the gas turbine generator 3 and the steam turbine generator 4 will remain connected to the power grid 2.

Referring now to FIG. 3, a flow chart is explained to illustrate the previously discussed method of operation for high turndown operation by keeping the generator synchronised to the power grid 2 and operate the generator(s) as motor(s). In an initial step 100 the main fuel will be reduced or switched off. Also the pilot fuel will be controlled in a way that a stable combustion on a minimum level is guaranteed. The pilot fuel is continuously monitored and adapted to provide a stable combustion. The method step 100 is particularly initiated if the trigger signal 31 is present, representing that the power grid 2 does not demand power from the power plant 1.

In consequence, in method step 100 at least the gas turbine generator 3 is operated in the motor mode so that the generator is driven by the power grid 2.

If the power supply from renewable energy resources is not sufficient anymore and the power grid 2 requires additional power from the power plant 1, a second trigger signal 32 will occur which changes the mode of operation into the procedure step 101. In this step 101 the main fuel supply to the main burner 24 is ramped up again and the pilot fuel is adapted accordingly, so that the gas turbine engine 5 starts to generate active power again and the gas turbine generator 3 produces sufficient power which then can be provided to the power grid 2 again. Additionally also the steam turbine 6 is ramped up so that the steam turbine generator 4 creates increased power to be supplied to the power grid 2. Both generators (3 and 4) therefore are then again operating in a generator mode. According to the exemplary control logic, the ramping up is checked by a check step 102. Once the gas turbine engine 5 is in full load operation again, the control unit procedure can come to an end and proceed to step 103 which defines the normal mode of full load operation in which obviously several controlling steps need to be performed but not in focus of this inventive concept here.

This new procedure and new control algorithm for the gas turbine engine 5 allows to reduce creep stress during turndown operation. Low cycle fatigue will not be experienced or minimised. Furthermore this mode of operation still guarantees to maintain emission levels that are required from legislation, particularly for NOx and CO. Besides, this new control method allows fast start up again without a time consuming start up procedure. Furthermore the gas turbine engine 5 and the steam turbine 6 are never brought to full stop which typically would then require a longer period of standstill or slow revolvement before they can be started again.

## Claims

1. Method for controlling a power plant (1), the power plant (1) at least comprising a gas turbine engine (5) and a generator (3), wherein the generator (3) is initially driven by the gas turbine engine (5) in a generator mode and the generator (3) is connectable to a power grid (2) for feeding power to the power grid (2),
comprising the steps of:
reducing or switching off main fuel while supplying pilot fuel to a combustor (7) of the gas turbine engine (5), consecutive to operation in the generator mode, and maintaining the generator (3) synchronised to the power grid (2), such that the generator (3) is driven as a motor from power provided from the power grid (2).

2. Method according to claim 1,
**characterised in that**
the step of reducing or switching off main fuel is triggered in response to a signal indicating an excessive supply of power to the power grid (2) from further power plants, particularly renewable energy power plants.

3. Method according to one of the preceding claims,
the method further comprising the steps of:
- monitoring a flame stability in a combustor (7) of the gas turbine engine (5); and
- increasing the pilot fuel supply in response to detecting insufficient flame stability, while the generator (3) is maintained to be operated as a motor.

4. Method according to one of the preceding claims,
the method further comprising the steps of:
- monitoring an operating parameter indicative to rotational power generated by the gas turbine engine (5) at its shaft (8) that connects to the generator (3);
- throttling the pilot fuel supply in response to detecting the operational parameter to exceed a given threshold, such that the generator (3) is maintained to be operated as a motor.

5. Method according to one of the preceding claims,
the method further comprising the steps of:
- in response to a trigger signal, re-activating and ramping up fuel supply of the main fuel to increase rotational power of the gas turbine engine (5), such that the generator (3) is operated in the generator mode again.

6. Method according to one of the preceding claims,
for a combined cycle configuration, the power plant (1) additionally comprises an additional steam turbine (6) and a further generator (4) driven by the steam turbine (6) and connectable to the power grid (2) for feeding power to the power grid (2), the steam turbine (6) being supplied with steam heated by an exhaust gas heat exchanger (10) connected to an exhaust (12) of the gas turbine engine (5),
the method further comprising the steps of:
- maintaining the further generator (4) synchronised to the power grid (2); and
- operating the step of reducing or switching off the main fuel for the gas turbine engine (5) in such a way that in consequence to the reducing or switching off the main fuel an amount and/or pressure of the steam provided to the steam turbine (6) is reduced so that the further generator (4) operates with a power to the power grid limited by a minimum steam flow limit of the steam turbine (6).

7. Method according to claim 6,
**characterised in that**
in consequence to the reducing or switching off the main fuel only one of the generator (3) and the further generator (4) is driven as a motor whereas the other one is maintained in generator-mode or in idle operation.

8. Gas turbine power plant, comprising
- a gas turbine engine (5);
- a generator (3), wherein the generator (3) is driven by the gas turbine engine (5) and the generator (3) is connectable to a power grid (2);
- a control arrangement (13) configured according to any one of the claims 1 to 5.

9. Combined cycle power plant (1), comprising
- a gas turbine engine (5);
- a generator (3), wherein the generator (3) is driven by the gas turbine engine (5) and the generator (3) is connectable to a power grid (2);
- a steam turbine (6);
- a further generator (4), wherein the further generator (4) is driven by the steam turbine (6) and the further generator (4) is connectable to a power grid (2);
- a control arrangement (13) configured according to any one of the claims 6 to 7.
